(19) Europäisches Patentamt / European Patent Office / Office européen des brevets

(11) **EP 3 922 099 A1**

(12) # DEMANDE DE BREVET EUROPEEN

(43) Date de publication:
**15.12.2021 Bulletin 2021/50**

(51) Int Cl.:
***A01M 7/00*** *(2006.01)*

(21) Numéro de dépôt: **20179018.5**

(22) Date de dépôt: **09.06.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Carbon BEE**
**26300 Châteauneuf-sur-Isère (FR)**

(72) Inventeur: **GERMAIN, Gérald**
**26350 CREPOL (FR)**

(74) Mandataire: **Fidal Innovation**
**4-6 avenue d'Alsace**
**92400 Courbevoie (FR)**

(54) ## DISPOSITIF DE CONTRÔLE DE CIRCUIT HYDRAULIQUE DE DISTRIBUTION D'UN PRODUIT LIQUIDE À PULVÉRISER D'UNE MACHINE AGRICOLE

(57) Dispositif de contrôle de la régulation d'un circuit hydraulique de la pression et de la dose réellement pulvérisée, appliquée en pulvérisation localisée ou modulée buse à buse ou par groupe de buses sur des végétaux cibles (4) d'une culture agricole (5), pour le traitement localisé d'une culture agricole.

[Fig. 1]

EP 3 922 099 A1

**Description**

**DOMAINE DE L'INVENTION**

La présente invention se rapporte aux dispositifs et aux systèmes de contrôle d'un circuit hydraulique de distribution d'un produit liquide à pulvériser d'une machine agricole de traitement d'une parcelle agricole.

**ARRIÈRE-PLAN TECHNOLOGIQUE**

Les cultures agricoles nécessitent un entretien régulier afin d'optimiser la production agricole. Les traitements de fertilisation, de désherbage, de lutte contre les carences, ou de lutte contre les maladies ou nuisibles sont nécessaires afin d'optimiser le rendement de production de ces cultures.

Les techniques culturales modernes tendent à réduire les intrants et traitements, dans cet objectif, elles proposent différentes méthodes afin de traiter ces problématiques.

Les mesures prophylactiques, dont l'objectif est de réduire au maximum le nombre d'adventices présentes sur une parcelle agricole entrant en concurrence avec la culture sont largement employées dans les itinéraires techniques des grandes cultures et cultures maraîchères. Les méthodes suivantes sont recommandées dans cet objectif :

- La rotation de cultures fut l'une des premières méthodes théorisée dès le début du XXe siècle, tel que décrit dans le document « Clyde E. Leighty, 1938 Yearbook of Agriculture », consistant en une alternance des cultures automnales et printanières cela afin de rompre certains cycles biologiques des adventices ;

- le labour permet de réduire le nombre d'adventices dans la culture par enfouissement des graines de ceux-ci ;

- le faux semis, tel que décrit dans le document « Evaluating Cover Crops for Benefits, Costs and Performance within Cropping System Niches. » Agronomy Journal 97 (1). American Society of Agronomy: 322-32, en faisant lever des adventices à levée rapide, détruits avant le semis de la culture permet également de réduire le taux d'adventices présents dans la culture.

Les mesures curatives, dont l'objectif est d'éviter les levées d'adventices dans la culture, et d'avoir une incidence sur le rendement de celle-ci recommandées sont les suivantes :

- Le désherbage chimique, tel que décrit dans le document « Pulvérisation en grandes cultures. Les clés de la réussite », Arvalis, permet d'éviter les levées d'adventices dans la culture. Les produits phytosanitaires dédiés au désherbage chimique sont adaptés soit à un traitement pré-levée permettant d'éviter la germination des adventices présents à l'état de graines, soit à un traitement post-levée, permettant de détruire les adventices ayant levé dans la culture. Le désherbage chimique est soit sélectif, permettant de traiter une typologie d'adventice, soit non-sélectif, permettant de détruire l'ensemble des végétaux présent dans la parcelle au moment du traitement. L'utilisation répétée d'un même groupe chimique de désherbant entraîne l'apparition de résistances des adventices, ainsi qu'une phytotoxicité ayant un impact sur le rendement de la culture. Les désherbants chimiques sont appliqués sur la parcelle au moyen d'un pulvérisateur ;

- le désherbage mécanique tel que décrit dans le document « La bineuse, un outil adapté à une large gamme de sol », Arvalis, en pré-levée ou post-levée, permet de détruire soit les plantules d'adventices, soit les adventices à un stade plus avancé. Ce procédé de désherbage améliore la structure du sol et perturbe également le cycle de certains ravageurs. Les outils employés pour un désherbage mécanique sont les herses étrilles ou houes rotatives pour un désherbage complet ou les bineuses à dents pour un traitement inter-rang ou sous le rang ;

- des méthodes alternatives sont développées, tel que décrit dans le document «Alternative methods in weed management to the use of glyphosate and other herbicide », pesticide action network europe, 2018 (second édition), avec notamment, le traitement des adventices par injection d'un courant électrique, consistant à détruire chaque adventice levée par éclatement des cellules biologiques en provoquant une évaporation de l'eau contenue dans celles-ci. Les traitements des adventices par chaleur, dont les procédés sont basés sur l'utilisation de laser, ou d'eau chaude haute pression, permettent de détruire sélectivement les adventices par un apport calorique suffisant à la destruction des cellules biologiques de l'adventice.

Les méthodes de traitement des carences et des maladies ou de lutte contre les nuisibles recommandées sont essentiellement basées sur des traitements chimiques.

Les traitements, qu'ils soient chimiques, mécaniques ou alternatifs, sont exécutés par un engin, généralement attaché à un véhicule motorisé qui se déplace dans la culture.

Ces traitements, sont traditionnellement larges et ne prennent pas en compte la présence ou non d'adventices, des nuisibles, des carences ou des maladies, en traitant la totalité de la parcelle agricole de façon homogène. Ce mode de contrôle est peu précis et entraîne une surutilisation des produits phytosanitaires lorsque le traitement est chimique, ou un débit de chantier réduit lorsque le traitement est mécanique ou alternatif.

Dans ce contexte, l'application localisée de produit phytosanitaires semble une alternative intéressante permettant de réduire la surface réellement traitée à la surface utile.

La thèse « Segmentation d'images pour la localisation d'adventices. Application à la réalisation d'un système de vision pour une pulvérisation spécifique en temps réel », Jérémie Bossu, Université de Bourgogne/CNRS 5158, 4 décembre 2007, décrit un dispositif expérimental de pilotage d'épandage comprenant une caméra montée sur un engin agricole, une unité centrale de détection et de calcul de l'instant optimal de pulvérisation, prenant en compte la position des plantes dans les images acquises par la caméra. Le prototype est testé sur une route peinte.

Le document WO2012/032245, « Système de commande pour épandage agricole », décrit un système de commande d'épandage comprenant un ensemble de buses d'épandage, des moyens de cartographie de plantes à traiter utilisant, dans une forme de réalisation, des caméras, et des moyens pour piloter l'épandage en fonction des données de cartographie produite. Ce système de commande nécessite un premier passage du système dans la parcelle agricole afin de produire une cartographie de cette parcelle agricole utilisée dans un deuxième passage pour l'application du traitement.

Les rampes de pulvérisation agricole, dédiées aux traitements d'herbicides, de fongicide, ou de tout autre intrant, sont équipées d'un ensemble de buses de pulvérisation équi-reparties sur une rampe de pulvérisation, support d'un circuit hydraulique, et du circuit de contrôle desdites buses. Les buses sont généralement alimentées par une solution aqueuse composée du produit phytosanitaire à appliquer dilué dans de l'eau. Cette dilution est généralement mélangée directement dans la cuve principale, et peut dans certains cas - appelé injection directe - être mélangée plus en aval des buses avant le circuit de la rampe support des buses, ou directement à l'entrée de la buse.

La pulvérisation localisée, afin de faire varier le débit pulvérisé au cours de l'avancement de la machine agricole, est une approche permettant de réduire drastiquement, entre 30 % et 90%, la quantité de produit phytosanitaire appliquée sur la culture. Dans ce type de principe d'application du produit phytosanitaire, les buses de pulvérisation sont entièrement ouvertes au-dessus de la plante nécessitant un traitement, l'adventice à détruire lorsqu'un herbicide, sélectif ou non, est employé, le plant de la culture malade lorsqu'une molécule de traitement curatif est employée, et entièrement fermée sur le reste de la culture.

En extension à ce principe d'application de produits phytosanitaires, les buses de pulvérisation peuvent être modulées afin de n'appliquer qu'une portion de la dose maximale. Les applications de cette pulvérisation localisée et modulée permettent un traitement adapté finement à la problématique visée. Par exemple, un apport d'azote liquide peut être modulé en fonction du niveau de stress azoté de la plante.

Dans ce cas dernier, les buses de pulvérisation sont équipées d'un dispositif leur permettant de moduler la dose en fonction d'une commande donnée. Par exemple, les buses « PWM » du système de modulation Dynajet de TeeJet peuvent être utilisées. De façon équivalente le système Hawkeye de Raven peut également être utilisé. Ces systèmes sont commandables au moyen d'une consigne allant de 0 % à 100 %, afin de moduler la dose appliquée sur le végétal cible. Le rapport cyclique de contrôle du solénoïde de la buse est contrôlé par le contrôleur afin de prendre en compte la consigne demandée.

Le document « Buses à pulsation, une autre voie en pulvérisation de précision », Perspectives agricoles, N°445 - Juin 2017, décrit les principales avancées en pilotage des solénoïdes des buses en mode de modulation de largeur d'impulsion (souvent désigné par l'acronyme anglais « PWM » pour « Pulse Width Modulation ») sur la totalité des buses de la rampe de pulvérisation afin de moduler la dose appliquée par l'ensemble de la rampe sur la culture. Les conclusions de ce document indiquent que le dosage n'est pas complètement maîtrisé.

Ces systèmes de modulation à la buse nécessitent, afin que la bonne dose soit appliquée, une pression maîtrisée à l'entrée de la buse. Ces systèmes « PWM » peuvent moduler le rapport cyclique de la commande « PWM » pour compenser des baisses ou modifications instantanées de pression, mais cette compensation ne peut avoir lieu que pour des consignes de valeur faibles - car la compensation de baisse de pression consiste à augmenter le rapport cyclique qui ne peut donc être de valeur élevée avant compensation - et nécessitent donc un contrôle précis de la pression dans le circuit hydraulique en entrée.

De tels systèmes de contrôle en circuit fermé de la pression du circuit hydraulique en entrée des buses d'une rampe de pulvérisation ne sont aujourd'hui pas adaptés à un contrôle des buses une à une, ni à la modulation à la buse ou ensemble de buses. En effet, la pulvérisation localisée en contrôle ouvert/fermé de chaque buse génère des variations locales importantes de la pression en entrée des buses. De la même manière, la pulvérisation modulée en contrôle continu du débit des buses une à une, ou par groupe de buses, génère également de larges variations de pression locale en entrée desdites buses. En conséquence, il existe un besoin pour un système permettant concrètement d'appliquer les principes de pulvérisation localisée ou modulée dans le domaine de la machine agricole.

L'invention vise ainsi à permettre un traitement de la parcelle agricole, qui soit dimensionné à l'échelle des portions de la parcelle nécessitant réellement d'être traitées, en s'assurant que la bonne dose de produit est appliquée sur la surface visée.

## RESUME DE L'INVENTION

Ainsi, l'invention se rapporte à un dispositif informatisé de contrôle d'un circuit hydraulique de distribution d'un produit liquide à pulvériser d'une machine agricole de traitement d'une parcelle agricole comprenant un circuit de distribution en circulation continue alimentant une pluralité de buses, et un système d'alimentation pompant ledit produit liquide à destination du circuit de distribution en circulation continue, le dispositif informatisé comprenant un module de détermination d'un contrôleur adapté pour déterminer de manière répétée une valeur pour une caractéristique de distribution dudit système d'alimentation et de manière répétée une valeur pour une caractéristique d'au moins une buse, à partir d'une mesure de pression dans le circuit hydraulique en circulation continue et d'une localisation relative de ladite buse d'une zone à traiter.

Grâce à ces dispositions, un traitement contrôlé et localisé dont la dose appliquée est maîtrisée de la parcelle agricole est possible.

Selon différents aspects, il est possible de prévoir l'une et/ou l'autre des dispositions ci-dessous.

Selon une réalisation, pour le dispositif informatisé de contrôle d'un circuit hydraulique de distribution d'un produit liquide à pulvériser d'une machine agricole de traitement d'une parcelle agricole selon le mode de réalisation précédent, le système d'alimentation comprend une pompe principale et une électrovanne en aval de la pompe principale, et la caractéristique de distribution comprend une caractéristique de la pompe principale et/ou une caractéristique de l'électrovanne.

Ce mode de réalisation est particulièrement avantageux afin de maîtriser finement la pression instantanée disponible en entrée de chacune desdites buses afin que la dose réellement appliquée sur le végétal cible corresponde à la dose souhaitée en application.

Selon une réalisation, pour le dispositif informatisé de contrôle d'un circuit hydraulique de distribution d'un produit liquide à pulvériser d'une machine agricole de traitement d'une parcelle agricole selon l'un des modes de réalisations précédents, la caractéristique de buse correspond à une ouverture, ladite ouverture étant déterminée :

- dans une gamme {minimum ; maximum}, dans laquelle le maximum est 100% et le minimum est 0% ou est x% avec x différent de 0 ; ou
- dans une gamme continue entre un minimum et un maximum.

Ce mode de réalisation est particulièrement avantageux afin de moduler la dose appliquée par chacune des buses. Ce mode de fonctionnement permet de moduler certains phytosanitaires en fonction de l'état sanitaire des végétaux cibles.

Selon une réalisation, le dispositif informatisé de contrôle d'un circuit hydraulique de distribution d'un produit liquide à pulvériser d'une machine agricole de traitement d'une parcelle agricole selon l'un des modes de réalisations précédents comprend en outre un module informatisé de détection d'une zone à traiter comprenant un adventice, symptôme foliaire de stress ou maladies ou indicateur foliaire de biomasse.

Selon une réalisation, l'invention se rapporte à un circuit hydraulique de distribution d'un produit liquide à pulvériser d'une machine agricole de traitement d'une parcelle agricole comprend au moins un circuit de distribution en circulation continue alimentant une pluralité de buses, un système d'alimentation pompant ledit produit liquide à destination du circuit de distribution en circulation continue, et un dispositif informatisé de contrôle selon l'un quelconque des modes de réalisation précédents, le module de détermination du dispositif informatisé étant adapté pour déterminer de manière répétée une valeur pour une caractéristique de distribution dudit système d'alimentation et de manière répétée une valeur pour une caractéristique d'au moins une buse, à partir d'une mesure de pression dans le circuit hydraulique en circulation continue et d'une localisation relative de ladite buse et d'une zone à traiter.

Ce mode de réalisation permet de pulvériser la dose souhaitée sur les végétaux cibles.

Selon une réalisation, pour le circuit hydraulique de distribution d'un produit liquide à pulvériser d'une machine agricole de traitement d'une parcelle agricole selon le mode de réalisation précédent, le système d'alimentation comprend une pompe principale et une électrovanne en aval de la pompe principale, et comprend en outre :

- un clapet de surpression disposé entre la pompe principale et l'électrovanne, et adapté pour évacuer des surplus de pression hors du circuit de distribution en circulation continue ; et/ou
- un surpresseur disposé entre la pompe principale et l'électrovanne.

Selon une réalisation, pour le circuit hydraulique de distribution d'un produit liquide à pulvériser d'une machine agricole de traitement d'une parcelle agricole selon l'un des deux modes de réalisation précédents, le circuit de distribution en circulation continue comprend une vanne à ressort d'évacuation en aval des buses.

Selon une réalisation, le circuit hydraulique de distribution d'un produit liquide à pulvériser d'une machine agricole de traitement d'une parcelle agricole selon l'un des trois modes de réalisation précédents comprend en outre une cuve du produit liquide à pulvériser, le système d'alimentation pompant ledit produit liquide dans la cuve.

Selon une réalisation, pour le circuit hydraulique de distribution d'un produit liquide à pulvériser d'une machine agricole de traitement d'une parcelle agricole selon le mode de réalisation précédent, la cuve est une cuve de pré-mélange, le circuit comprenant en outre une cuve d'eau, une pompe d'alimentation de la cuve de pré-mélange depuis la cuve d'eau, un réservoir de produit phytosanitaire, un distributeur de produit phytosanitaire depuis le réservoir de produit phytosanitaire dans la cuve de pré-mélange, et le module de détermination est adapté pour déterminer en outre une valeur pour une caractéristique de distribution de la pompe d'alimentation et/ou du distributeur de produit phytosanitaire.

Selon une réalisation, l'invention se rapporte à un système de distribution d'un produit liquide à pulvériser d'une machine agricole de traitement d'une parcelle agricole, qui comprend au moins un système de détection déterminant une localisation d'une zone à traiter, et un circuit hydraulique selon l'un des cinq modes de réalisation précédents, le module de détermination du dispositif informatisé étant adapté pour déterminer de manière répétée une valeur pour une caractéristique d'au moins une buse, à partir d'une mesure de pression dans le circuit hydraulique en circulation continue et d'une localisation relative de ladite buse et d'une zone à traiter déterminée à partir de ladite localisation d'une zone à traiter déterminée par le système de détection.

Selon une réalisation, l'invention se rapporte à un procédé informatisé de contrôle d'un circuit hydraulique de distribution d'un produit liquide à pulvériser d'une machine agricole de traitement d'une parcelle agricole comprend au moins un circuit de distribution en circulation continue alimentant une pluralité de buses, et un système d'alimentation pompant ledit produit liquide à destination du circuit de distribution en circulation continue, le procédé informatisé comprenant :

- un module de détermination d'un contrôleur détermine de manière répétée une valeur pour une caractéristique d'au moins une buse, à partir d'une mesure de pression dans le circuit hydraulique en circulation continue et d'une localisation relative de ladite buse et d'une zone à traiter.

Selon une réalisation, l'invention se rapporte à un programme d'ordinateur comprenant des instructions de code de programme pour l'exécution du procédé selon le mode de réalisation précédent lorsque le programme est exécuté sur un ordinateur.

## BREVE DESCRIPTION DES DESSINS

Des modes de réalisation de l'invention seront décrits ci-dessous par référence aux dessins, décrits brièvement ci-dessous :

- [Fig. 1] : une représentation schématique du dispositif complet ; et

- [Fig. 2] : une représentation schématique structurelle des éléments de détection du dispositif de la Fig. 1 ;

- [Fig. 3] : une représentation schématique d'un dispositif de régulation de la pulvérisation localisée selon un mode de réalisation de l'invention ;

- [Fig. 4] : une représentation schématique alternative d'un dispositif de régulation de la pulvérisation localisée selon un autre mode de réalisation de l'invention ;

- [Fig. 5] : une représentation schématique alternative d'un dispositif de régulation de la pulvérisation localisée intégrant une fonction d'injection directe d'incorporation de produits phytosanitaires purs avec l'eau directement dans le circuit de distribution selon un autre mode de réalisation de l'invention.

Sur les dessins, des références identiques désignent des objets identiques ou similaires.

## DESCRIPTION DETAILLEE

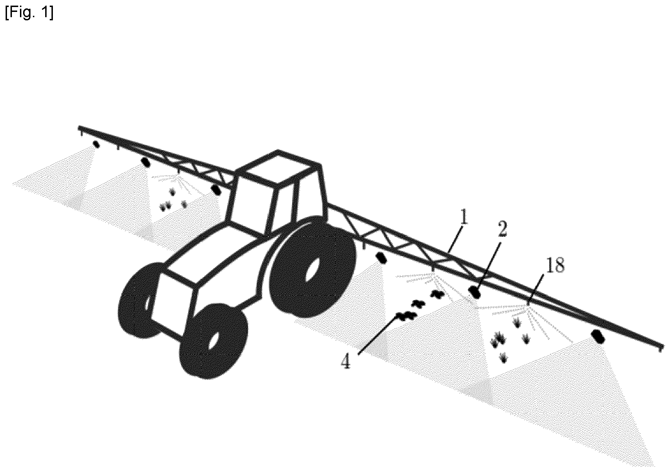

La Fig. 1 illustre un outil de pulvérisation agricole 1 sur une machine agricole utilisé dans un traitement d'une parcelle agricole 5.

Selon un mode de réalisation, le dispositif de pulvérisation est équipé d'un système de détection 2. Le système de détection 2 est adapté pour détecter des particularités de la parcelle agricole, notamment la présence d'adventices, de symptômes foliaires de stress ou de maladies, ou des indicateurs foliaires de biomasse. Le système de détection 2 est adapté pour permettre de localiser la présence d'adventices, de symptômes foliaires de stress ou de maladies ou d'indicateurs foliaires de biomasse. Il est par exemple basé sur une technologie optique, et comprend une ou plusieurs dispositifs de détection optique pour l'acquisition d'images de la parcelle agricole au cours du déplacement de la machine agricole. Les dispositifs de détection optique comprennent par exemple des systèmes d'acquisition hyperspectrale. Le système de détection 2 comprend également un processeur adapté pour traiter les images hyperspectrales acquises, et pour déterminer les zones à pulvériser contenant les végétaux cibles 4. La détermination peut par exemple être réalisée au moyen d'un réseau de neurones. A titre d'exemple illustratif, le système de détection est mis en œuvre selon WO 2019/053,364 ou selon la demande internationale déposée sous le numéro EP2020/56401, qui sont toutes les deux incorporées ici par référence. L'outil de pulvérisation agricole 1 comprend ainsi un contrôleur 50 qui peut prendre en compte une information de localisation des zones à traiter pour commander les buses de pulvérisation agricole 18. Les buses de pulvérisation agricole 18 peuvent ainsi être commandées indépendamment les unes des autres en ouverture pleine afin de traiter lesdites zones à pulvériser et ne pas traiter, en les commandant en fermeture pleine, les zones ne contenant pas de végétaux cibles 4.

En variante, si les buses de pulvérisation agricole peuvent être commandées pour une ouverture partielle, par exemple au moyen d'un dispositif de modulation de largeur d'impulsion (« PWM ») du solénoïde commandant chacune des buses, les buses de pulvérisation agricole 18 sont commandées en ouverture pleine sur lesdites zones à pulvériser, et commandées en ouverture partielle sur les zones ne contenant pas de végétaux cibles 4. Ainsi, les zones contenant des végétaux cibles 4 sont traitées en dose pleine, adaptée au traitement agricole souhaité, et les zones ne contenant pas de végétaux cibles 4 sont traitées en dose de fond, afin de couvrir ladite zone ne contenant pas de végétaux cibles avec une dose de contrôle. Cette variante est utile par exemple, dans le cadre d'un traitement herbicide racinaire, afin de contrôler la pousse d'adventices non visibles à la période du traitement agricole.

En variante, les buses de pulvérisation agricole 18 sont contrôlées par groupes de buses adjacentes, appelés sections, chacune desdites sections étant commandée indépendamment des autres sections. Dans la suite de la description, on fait référence à un contrôle individuel des buses. Toutefois, il est compris que, en variante, une section de buses peut être contrôlée de la même manière.

En variante, lesdites buses de pulvérisation agricole 18 sont modulables, indépendamment ou par section, en ouverture de manière à ce que la dose pulvérisée sur les végétaux cibles soit adaptée à l'état sanitaire de stress, de symptômes foliaires de présence de maladie ou d'indicateur de biomasse des plantes de la zone à traiter. Ainsi, dans ce mode de réalisation, le système de détection 2 est adapté, outre la détection de la localisation d'une zone à traiter, pour la quantification d'un état de sanitaire de stress, de présence de symptômes foliaires de maladies ou de biomasse de la zone à traiter. Par exemple, les buses ou sections peuvent être modulées en fonction de la biomasse mesurée par ledit système de détection 2, appliquant ainsi une dose en relation à la biomasse mesurée dans la zone à traiter. La dose est par exemple proportionnelle à la quantification. En variante, la dose peut être inversement proportionnelle à la quantification. Cet exemple a une application dans le traitement par fongicide de la culture, où la dose appliquée peut être inversement proportionnelle à la mesure de biomasse desdits végétaux cibles 4. De la même façon, l'application d'engrais azoté sur la culture agricole 5 peut être modulée proportionnellement au stress azoté mesuré sur lesdits végétaux cibles 4.

En variante, le système de détection 2 produit une cartographie des modulations et des zones à traiter dans la culture agricole 5. Ladite cartographie géolocalisée peut postérieurement être utilisée afin de traiter les zones à traiter par l'outil de pulvérisation agricole 1 qui appliquera les commandes aux buses ou sections de buses de pulvérisation agricole 18. Dans cet exemple de réalisation, la machine agricole, au moment de l'application du traitement, ne comprend pas nécessairement un système de détection 2. En variante, elle peut aussi comprendre un système de détection adapté pour recaler la localisation actuelle de la machine agricole par rapport à la cartographie préalablement réalisée. Ce système de détection utilisé pour le recalage peut être un système distinct du système de détection 2, par exemple ne pas comprendre de capteurs hyperspectraux et/ou de modules de traitement de reconnaissance ou de quantification d'adventices, de symptômes foliaires de stress ou de maladies ou d'indicateurs foliaires de biomasse.

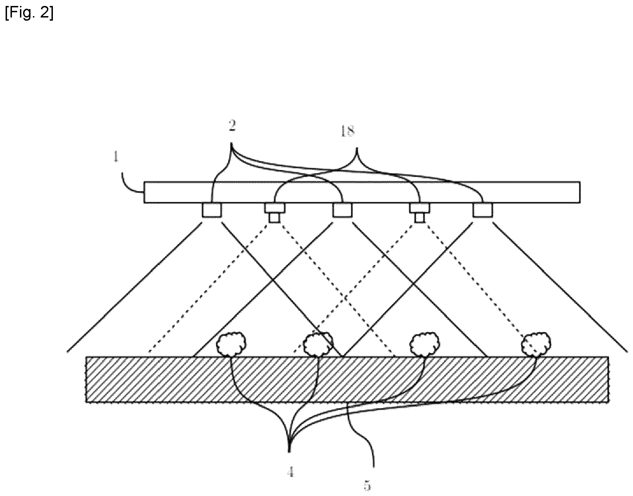

La Fig. 2 illustre l'outil de pulvérisation agricole 1 au-dessus d'une parcelle agricole 5 dans laquelle des végétaux cibles 4 sont traités par ouverture des buses de pulvérisation agricole 18 lorsque lesdites buses de pulvérisation agricole 18 sont au-dessus de la zone à traiter contenant les végétaux cibles 4, la zone à traiter est, dans cet exemple, définie comme une zone contenant les végétaux cibles. De manière répétée, au cours du déplacement de la machine agricole, le taux d'ouverture ou de modulation desdites buses de pulvérisation agricole 18 est déterminé par le contrôleur 50 de manière à ce que la dose adéquate soit appliquée sur les végétaux cibles 4. Ledit système de détection d'adventices ou de symptômes foliaires de stress ou maladies ou d'indicateurs foliaires de biomasse 2 est positionné sur l'outil de pulvérisation agricole 1 afin de mesurer la zone à traiter devant l'outil de pulvérisation agricole dans le sens d'avancement dudit outil de pulvérisation agricole.

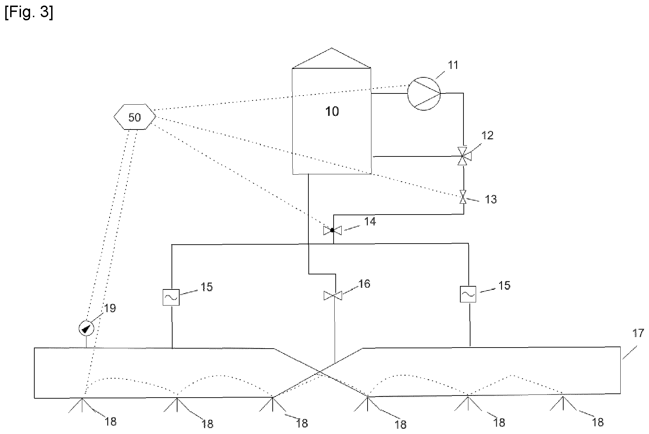

La Fig. 3 illustre un système de régulation de pression hydraulique permettant d'alimenter lesdites buses de pulvérisation agricole 18 en pression constante. En effet, les buses 18 nécessitent une pression constante et maîtrisée afin d'appliquer la dose souhaitée sur les végétaux cibles.

Le circuit de distribution hydraulique comprend :

- Une cuve 10 contenant le produit phytosanitaire à appliquer sur les végétaux cibles ;

- Une pompe hydraulique 11 à couple variable, dite « principale » alimentant le circuit hydraulique depuis la cuve 10, et commandée par le contrôleur 50 ;

- Un clapet de surpression 12 permettant d'évacuer vers la cuve 10 les surplus de pression ;

- Optionnellement, une électrovanne 13 de contrôle de pression commandée par le contrôleur 50 ;

- Une électrovanne 14 de contrôle de pression de rampe commandée par le contrôleur 50 ;

- Optionnellement, au moins un filtre 15 de filtration du distillat alimentant le circuit continu 17 de la rampe de pulvérisation depuis l'électrovanne 14 de contrôle de pression de rampe ;

- Un circuit continu circulaire 17 alimentant en pression constante les buses de pulvérisation 18 et alimenté en liquide à pulvériser à pression constante depuis l'électrovanne 14 de contrôle de pression de rampe, le cas échéant à travers le filtre 15 ;

- Au moins un capteur de pression 19 dans le circuit continu circulaire 17 mesurant la pression hydraulique instantanée dudit circuit continu circulaire 17, le capteur de pression 19 étant relié au calculateur de manière à transmettre l'information mesurée à destination du contrôleur 50 ;

- Au moins une buse de pulvérisation 18 alimentée en liquide à pulvériser à pression constante depuis le circuit continu circulaire 17;

- Optionnellement, une vanne à ressort 16 permettant d'évacuer le surplus de pression du circuit continu circulaire 17 vers la cuve 10 ;

- Le contrôleur 50, adapté pour commander la pompe hydraulique à couple variable 11, et l'électrovanne 14, voire l'électrovanne 13 et les buses de pulvérisation 18 en fonction des détections provenant dudit système de détection 2 ou de la cartographie géolocalisée des zones à traiter.

Mis à part le contrôleur 50, les différents éléments du circuit de distribution hydraulique décrits ci-dessus sont disposés selon un trajet amont-aval du fluide à distribuer dans le circuit de distribution hydraulique. Toutefois, d'autres variantes de réalisation sont possibles.

L'appellation « système d'alimentation » désigne ainsi les composants amont du circuit de distribution hydraulique, qui acheminent le liquide à pulvériser en direction du circuit continu circulaire.

Un circuit continu circulaire est défini comme un circuit passant à la fois par au moins un point d'approvisionnement en fluide (ou point d'entrée) et au moins deux buses de pulvérisation. Différentes réalisations sont possibles. Dans l'exemple présenté, on observe que le circuit continu circulaire comprend deux points d'approvisionnement. Chaque point d'approvisionnement est disposé entre les deux mêmes groupes de buses.

Comme décrit ci-dessus, le contrôleur 50 détermine le taux d'ouverture de chaque buse. Cette détermination est basée sur la localisation relative des buses et des zones à traiter. Par exemple, les localisations instantanées des buses sont connues du contrôleur 50. Chaque buse peut comprendre un système de géolocalisation. En variante, la machine agricole comprend un système de géolocalisation, et le contrôleur est adapté pour déterminer la localisation des buses à partir de la localisation mesurée de la machine agricole, et d'une position relative prédéterminée connue des buses par rapport à la machine agricole.

La localisation des zones à traiter peut être exprimée dans le même référentiel que le référentiel de la machine agricole. Par exemple, les zones à traiter sont géolocalisées. Ceci implique que la détection des zones à traiter utilise également un système de géolocalisation.

Par ailleurs, le taux d'ouverture de chaque buse peut être absolu (0%, 100%), ou relatif (par exemple, x% à la place de 0, avec x non nul fixe ; ou x% variable, et dépendant de la quantification réalisée au cours de la détection).

Le contrôleur 50 détermine les consignes à appliquer à la pompe à couple variable 11 et l'électrovanne 14, en fonction d'un ensemble de données accessibles au contrôleur 50. La consigne à la pompe 11 peut être calculée en fonction des taux d'ouverture de buses 18 actuelles, par exemple suivant les relations suivantes :

$$C(t)=f(o_1^t,o_2^t,...,o_n^t) = g(o_1^t) + g(o_2^t) + ... + g(o_n^t)$$

avec :

C(t), la consigne de pression à l'instant t ;

$o_i^t$, avec i= 1, ..., n, le taux d'ouverture de la buse 18 i à l'instant t ;

f(x), fonction de corrélation de perte de pression en fonction de l'ouverture des buses 18. Cette fonction fait la relation entre le taux d'ouverture $o_i^t$ de chaque buse i à l'instant t et la perte de pression attendue par l'application de ce taux d'ouverture. Pour cela, la fonction additionne les pertes de pression attendues de chaque buse i à l'instant t, définies par la fonction $g(o_i^t)$.

g(x), fonction de corrélation de la perte de pression générée dans ledit circuit continu circulaire 17 par l'application d'un taux d'ouverture x sur une desdites buses 18. Par exemple, la fonction g(x) peut être linéaire et définie par g(x) = a.x où a est la constante de corrélation entre le taux d'ouverture x et la perte de pression engendrée par cette ouverture. En variante, la fonction g(x) peut être non-linéaire et prendre en compte les effets hydrauliques de diffusion des gouttes. Cette fonction g(x) peut être fournie par le fabricant des buses 18, ou être déterminée au cours d'essais comprenant des mesures de débit.

L'électrovanne de contrôle de rampe 14 est commandée par le contrôleur (50) à l'aide d'un système régulateur. Selon un exemple de réalisation, on met en œuvre un régulateur proportionnel-intégral-dérivé PID suivant la relation suivante :

$$u(t)=K_p\, e(t) + K_i \int e(t')dt' + K_d\, [de(t'')/dt''](t)$$

avec :

u(t), commande d'ouverture de l'électrovanne 14 à l'instant t,

e(t), erreur à l'instant t définie par e(t)=y(t)-C(t)

y(t), mesure de la pression à l'instant t depuis le capteur de pression 19 dans le circuit continu circulaire 17,

$K_p$, coefficient proportionnel de régulation,

$K_i$, coefficient intégral de régulation, l'intégrale allant de 0 à t,

$K_d$, coefficient dérivé de régulation.

La pression de sortie de la pompe à couple variable 11 est ainsi ajustée suivant la formule suivante :

$$P(t)=P(t-1)+\lambda.u(t)$$

avec :

P(t), la pression commandée à l'instant t sur la pompe à couple variable 11 ;

A, constante inférieure à 1 d'intégration des commandes d'ouverture de l'électrovanne (14).

En variante, le contrôleur 50 ne connaît pas les taux d'ouvertures $o_i^t$ desdites buses 18. Dans cette variante,

C(t) = $P_n$ avec $P_n$ la pression nominale souhaitée prédéterminée dans ledit circuit continu circulaire 17.

En variante, la pompe à couple variable 11 n'est pas commandée par le contrôleur 50. Dans cette variante, la pression en sortie de la pompe à couple variable n'est pas pilotée et est constante.

Le système met en oeuvre une communication entre les divers composants qui peut être mise en œuvre par tout moyen adapté, comme par exemple par mise en œuvre d'un réseau filaire, ou par un réseau sans fil, et mettant en œuvre un protocole de communication adapté pour la transmission de données et de consignes.

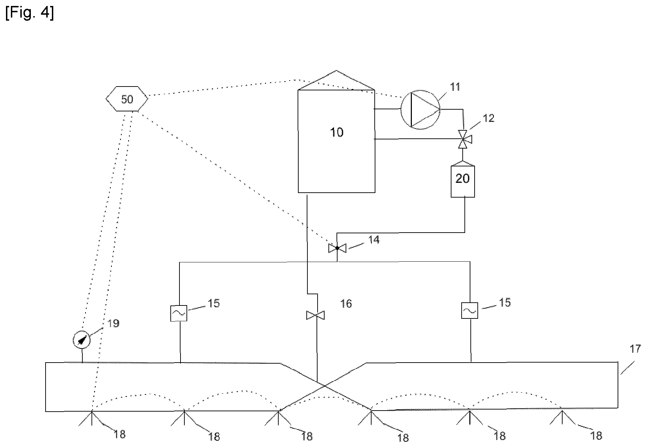

La Fig. 4 illustre un système alternatif de régulation de pression hydraulique permettant d'alimenter les buses de pulvérisation agricole 18 en pression constante.

Ledit circuit de distribution hydraulique comprend :

- Une cuve 10 contenant le produit phytosanitaire à appliquer sur les végétaux cibles ;

- Une pompe hydraulique 11 à couple variable alimentant le circuit hydraulique depuis la cuve 10, et commandée par le contrôleur 50;

- Un clapet de surpression 12 permettant d'évacuer vers la cuve 10 les surplus de pression ;

- Un surpresseur 20, à membrane, piston ou ressort, permettant de stocker une pression élevée en attente des besoins en pression du circuit continu circulaire 17 ;

- Une électrovanne 14 de contrôle de pression de rampe commandée par le contrôleur 50 ;

- Optionnellement, au moins un filtre 15 de filtration du distillat alimentant le circuit continu 17 de la rampe de pulvérisation depuis l'électrovanne 14 de contrôle de pression de rampe ;

- Un circuit continu circulaire 17 alimentant en pression constante les buses de pulvérisation 18 et alimenté en liquide à pulvériser à pression constante depuis l'électrovanne 14 de contrôle de pression de rampe, le cas échéant à travers le filtre 15 ;

- Au moins un capteur de pression 19 dans le circuit continu circulaire 17 mesurant la pression hydraulique instantanée dudit circuit continu circulaire 17, le capteur de pression 19 étant relié au calculateur de manière à transmettre l'information mesurée à destination du contrôleur 50 ;

- Optionnellement, une vanne à ressort 16 permettant d'évacuer le surplus de pression du circuit continu circulaire 17 vers la cuve 10 ;

- Au moins une buse de pulvérisation 18 alimentée en liquide à pulvériser à pression constante depuis le circuit continu circulaire 17 ;

- Le contrôleur 50 adapté pour commander la pompe hydraulique à couple variable 11, et l'électrovanne 14 et les buses de pulvérisation 18 en fonction des détections provenant dudit système de détection d'adventices ou de symptômes foliaires de stress ou maladies ou d'indicateurs foliaires de biomasse(2 ou de la cartographie géolocalisée des zones à traiter.

Dans cette variante, le contrôleur 50 détermine les consignes à appliquer à la pompe à couple variable 11 et l'électrovanne 14. Les consignes sont calculées en fonction des taux d'ouvertures de buses 17 actuelles suivant les relations suivantes :

$$C(t) = f(o_1^t, o_2^t, ..., o_n^t) = g(o_1^t) + g(o_2^t) + ... + g(o_n^t)$$

avec :

C(t), la consigne de pression à l'instant t ;

$o_i^t$, avec i= 1, ..., n, le taux d'ouverture de la buse 18 i à l'instant t ;

f(x), fonction, par exemple linéaire, de corrélation de perte de pression en fonction de l'ouverture des buses 18.

Cette fonction fait la relation entre le taux d'ouverture $o_i^t$ de chaque buse i à l'instant t et la perte de pression attendue par l'application de ce taux d'ouverture, pour cela, la fonction additionne les pertes de pression attendues de chaque buse i à l'instant t, définis par la fonction $g(o_i^t)$.

g(x), fonction de corrélation de la perte de pression générée dans ledit circuit continu circulaire 17 par l'application d'un taux d'ouverture x sur une desdites buses 18. Par exemple, la fonction g(x) peut être linéaire et définie par g(x) = a.x où a est la constante de corrélation entre le taux d'ouverture x et la perte de pression engendrée par cette ouverture. En variante, la fonction g(x) peut être non-linéaire et prendre en compte les effets hydrauliques de diffusion des gouttes. Cette fonction g(x) peut être fournie par le fabricant desdites buses 18, ou être déterminée au cours d'essais comprenant des mesures de débit.

L'électrovanne de contrôle de rampe 14 est commandée par le contrôleur 50, par exemple par un système régulateur proportionnel-intégral-dérivé PID suivant la relation suivante :

$$u(t)=K_p\,e(t)+K_i\int e\,(t')dt' + K_d\,[de(t'')/dt''](t)$$

avec :

u(t), commande d'ouverture de l'électrovanne 14 à l'instant t,

e(t), erreur à l'instant t définie par e(t)=y(t)-C(t)

y(t), mesure la pression à l'instant t depuis le capteur de pression 19 dans le circuit continu circulaire 17,

$K_p$, coefficient proportionnel de régulation,

$K_i$, coefficient intégral de régulation,

$K_d$, coefficient dérivé de régulation.

La pression de sortie de la pompe à couple variable est ainsi ajustée suivant la formule suivante :

$$P(t)=P(t-1)+\lambda.u(t)$$

avec :

P(t), la pression commandée à l'instant t sur la pompe à couple variable 11 ;

A, constante inférieure à 1 d'intégration des commandes d'ouverture de l'électrovanne 14.

En variante, le contrôleur 50 ne connaît pas les taux d'ouvertures $o_n^t$ desdites buses 18. Dans cette variante, C(t) = $P_n$ avec $P_n$ la pression nominale souhaitée prédéterminée dans ledit circuit continu circulaire 17.

En variante, la pompe à couple variable 11) n'est pas commandée par le contrôleur 50. Dans cette variante, la pression en sortie de la pompe à couple variable n'est pas pilotée et est constante.

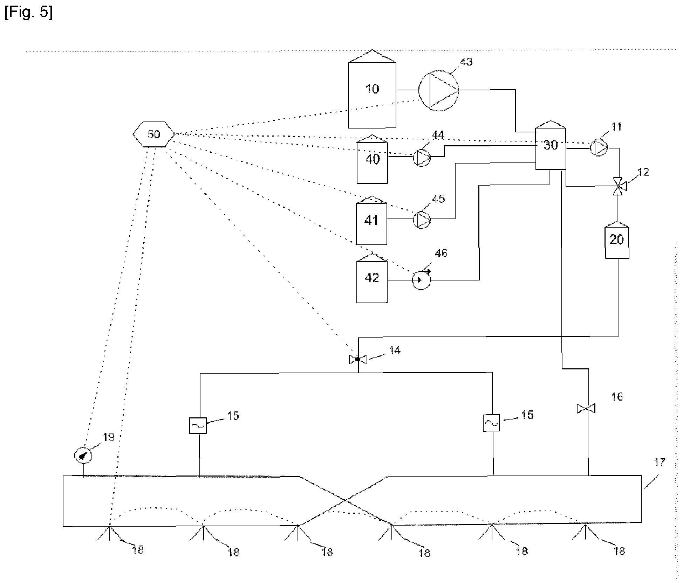

La Fig. 5 illustre un système alternatif de régulation de pression hydraulique à injection directe permettant d'alimenter lesdites buses de pulvérisation agricole 18 en pression constante avec un mélange d'eau, de phytosanitaire liquide ou solide et optionnellement un phytosanitaire en poudre.

Ledit circuit de distribution hydraulique comprend :

- Une cuve 10 contenant de l'eau qui sera diluée avec un ou des produits phytosanitaire dans une cuve de pré-mélange (ou « pré-mix ») 30 ;

- Une pompe volumétrique 43 alimentant la cuve de pré-mélange 30 depuis la cuve d'eau 10 et commandée par le contrôleur 50 ;

- Une cuve de phytosanitaire 40 contenant un produit phytosanitaire non-dilué qui sera dilué avec l'eau dans la cuve de pré-mélange 30 ;

- Une pompe volumétrique 44 alimentant la cuve de pré-mélange 30 depuis la cuve de produit phytosanitaire 40 et commandée par le contrôleur 50 ;

- Optionnellement une cuve d'adjuvant 41 contenant un produit adjuvant non dilué qui sera dilué avec l'eau et le produit phytosanitaire dans la cuve de pré-mélange 30 ;

- Une pompe volumétrique 45 alimentant la cuve de pré-mélange 30 depuis la cuve d'adjuvant 41 et commandée par le contrôleur 50 ;

- Optionnellement une cuve de poudre 42 contenant un produit phytosanitaire en poudre non dilué qui sera incorporé avec l'eau la cuve de pré-mélange 30 ;

- Optionnellement un distributeur volumétrique 46 alimentant la cuve de pré-mélange 30 depuis la cuve de poudre 42 et commandé par le contrôleur 50 ;

- Une pompe à couple variable 11 alimentant le circuit hydraulique depuis la cuve de pré-mélange 30 et commandée par le contrôleur 50 ;

- Un clapet de surpression 12 permettant d'évacuer vers la cuve de pré-mélange 30 les surplus de pression ;

- Un surpresseur 20, à membrane, piston ou ressort, permettant de stocker une pression élevée en attente des besoins en pression du circuit continu circulaire 17 ;

- Une électrovanne 14 de contrôle de pression de rampe commandée par le contrôleur 50 ;

- Optionnellement, au moins un filtre 15 de filtration du distillat alimentant le circuit continu 17 de la rampe de pulvérisation depuis l'électrovanne 14 de contrôle de pression de rampe ;

- Un circuit continu circulaire 17 alimentant en pression constante les buses de pulvérisation 18 et alimenté en liquide à pulvériser à pression constante depuis l'électrovanne 14 de contrôle de pression de rampe, le cas échéant à travers le filtre 15 ;

- Au moins un capteur de pression 19 dans le circuit continu circulaire 17 mesurant la pression hydraulique instantanée dudit circuit continu circulaire 17 à destination du contrôleur 50 ;

- Optionnellement, une vanne à ressort 16 permettant d'évacuer le surplus de pression du circuit continu circulaire 17 vers la cuve de pré-mélange 30 ;

- Au moins une buse de pulvérisation 18 alimentée en liquide à pulvériser à pression constante depuis le circuit continu circulaire 17 ;

- Le contrôleur 50, adapté pour commander la pompe hydraulique à couple variable 11, et l'électrovanne 14 et les buses de pulvérisation 18 en fonction des détections provenant dudit système de détection d'adventices ou de symptômes foliaires de stress ou maladies ou d'indicateurs foliaires de biomasse 2 ou de la cartographie géolocalisée des zones à traiter.

Dans cette variante, le contrôleur 50 détermine les consignes à appliquer à la pompe à couple variable 11 et l'électrovanne 14. Les consignes à la pompe peuvent être calculées en fonction des taux d'ouverture de buses (18) actuelles suivant les relations suivantes :

$$C(t) = f(o_1^t, o_2^t, ..., o_n^t) = g(o_1^t) + g(o_2^t) + ... + g(o_n^t)$$

avec:

C(t), la consigne de pression à l'instant t ;

$o_i^t$, avec i= 1, ..., n, le taux d'ouverture de la buse 18 i à l'instant t ;

f(x), fonction, par exemple linéaire, de corrélation de perte de pression en fonction de l'ouverture des buses 18. Cette fonction fait la relation entre le taux d'ouverture $o_i^t$ de chaque buse i à l'instant t et la perte de pression attendue par l'application de ce taux d'ouverture, pour cela, la fonction additionne les pertes de pression attendues de chaque buse i à l'instant t, définis par la fonction $g(o_i^t)$.

g(x), fonction de corrélation de la perte de pression générée dans ledit circuit continu circulaire 17 par l'application d'un taux d'ouverture x sur une desdites buses 18. Par exemple, la fonction g(x) peut être linéaire et définie par g(x) = a.x où a est la constante de corrélation entre le taux d'ouverture x et la perte de pression engendrée par cette ouverture. En variante, la fonction g(x) peut être non-linéaire et prendre en compte les effets hydrauliques de diffusion des gouttes. Cette fonction g(x) peut être fournie par le fabricant desdites buses 18, ou être déterminée au cours d'essais comprenant des mesures de débit.

L'électrovanne de contrôle de rampe 14 est commandée par le contrôleur 50 selon, par exemple, un système régulateur proportionnel-intégral-dérivé PID suivant la relation suivante :

$$u(t)=K_p\, e(t) + K_i \int e\,(t')dt' + K_d\, [de(t'')/dt''](t)$$

avec:

u(t), commande d'ouverture de l'électrovanne 14 à l'instant t,

e(t), erreur à l'instant t définie par e(t)=y(t)-C(t)

y(t), mesure la pression à l'instant t depuis le capteur de pression 19 dans le circuit continu circulaire 17,

$K_p$, coefficient proportionnel de régulation,

$K_i$, coefficient intégral de régulation,

$K_d$, coefficient dérivé de régulation.

La pression de sortie de la pompe à couple variable 11 est ainsi ajustée suivant la formule suivante :

$$P(t)=P(t-1)+\lambda.u(t)$$

avec:

P(t), la pression commandée à l'instant t sur la pompe à couple variable 11 ;

A, constante inférieure à 1 d'intégration des commandes d'ouverture de l'électrovanne 14.

En variante, le contrôleur 50 ne connaît pas les taux d'ouvertures $o_i^t$ desdites buses 18. Dans cette variante, $C(t) = P_n$ avec $P_n$ la pression nominale souhaitée dans ledit circuit continu circulaire 17.

En variante, la pompe à couple variable 11 n'est pas commandée par le contrôleur 50. Dans cette variante, la pression en sortie de la pompe à couple variable n'est pas pilotée et est constante.

Dans la variante décrite dans la Fig. 5, les pompes volumétrique 43, 44 et 45 sont commandées par le contrôleur 50 avec une consigne constante pour toute la durée du traitement de la parcelle agricole 5. Les consignes appliquées sur chacune des pompes volumétriques sont calculées de manière à produire un mélange dans ladite cuve de pré-mélange 30 dont les proportions de chacun des produits, l'eau en provenance de la cuve 10, le produit phytosanitaire en provenance de la cuve 40, et l'adjuvant en provenance de la cuve 41 le cas échéant, soit adapté à la dilution finale souhaitée et adaptée au traitement de la parcelle agricole 5. Par exemple, dans le cadre d'un traitement herbicide de chardons dans une culture de betterave sucrière, sur un traitement de rattrapage utilisant l'herbicide Lontrel SG (Corteva Agriscience), le dosage recommandé est le suivant :

- Phytosanitaire - Lontrel SG à 174 g/ha ;

- Adjuvant - Huile : 1L/ha ;

- Application totale : 130L/ha

Dans cet exemple, il est attendu une dilution de 174g de Lontrel SG en provenance de cuve 40 et d'1L huile en provenance de la cuve 41 dans 130L d'eau en provenance de la cuve 10. Les proportions de mélange dans ladite cuve de pré-mélange 30 sont donc les suivantes :

- 1,338 pour million de produit phytosanitaire Lontrel SG en provenance de la cuve 40 ;

- 7,692 pour million d'huile adjuvant en provenance de la cuve 41 ;

- et 990,970 pour million d'eau en provenance de la cuve 10.

Dans cet exemple, les pompes volumétriques sont commandées constamment au débit relatif souhaité. Par exemple, les pompes volumétrique 43, 44 et 45 sont des pompes péristaltiques à débit contrôlé et dont le débit est celui calculé pour obtenir le mélange souhaité.

De la même manière, le distributeur volumétrique 46 est commandé par le contrôleur 50 avec une consigne constante pour toute la durée du traitement de la parcelle agricole 5 afin d'incorporer le dosage souhaité de poudre dans ladite cuve de pré-mélange 30.

En variante, lesdites proportions de mélange dans ladite cuve de pré-mélange 30 ne sont pas constantes durant le traitement de ladite parcelle agricole 5. Dans cette variante, les proportions de chacun des produits, l'eau en provenance de la cuve 10, le produit phytosanitaire en provenance de la cuve 40, l'adjuvant en provenance de la cuve 41 le cas échéant, et la poudre en provenance de ladite cuve 42 le cas échéant, sont ajustées en fonction des détections en provenance dudit système de détection 2 afin d'appliquer une dose adaptée à la particularité détectée dans la parcelle agricole 5 sur les végétaux cible 4.

Cette variante trouve une application avantageuse lorsque ledit système de détection 2 est utilisé précédemment pour établir une cartographie des particularités, les végétaux cibles 4, dans la parcelle agricole 5. Ladite cartographie de présences des végétaux cibles 4 est ainsi utilisée, lors d'un nouveau passage de la machine agricole dans ladite parcelle agricole 5, par ledit système de détection 2 afin de déterminer les zones à traiter, et ajuster les proportions de chacun des produits, l'eau en provenance de la cuve 10, le produit phytosanitaire en provenance de la cuve 40, l'adjuvant en provenance de la cuve 41 le cas échéant, et la poudre en provenance de ladite cuve 42 le cas échéant, en fonction des végétaux cibles 4 à traiter, en tenant compte du délai de transmission des nouvelles proportions de mélange des produits en fonction de la vitesse d'avancement de la machine agricole ; la vitesse d'avancement pouvant être établie au moyen du système de géolocalisation par exemple.

Ainsi, selon un aspect indépendant, l'invention se rapporte à un dispositif informatisé de contrôle 50 d'un circuit hydraulique de distribution d'un produit liquide à pulvériser d'une machine agricole de traitement d'une parcelle agricole 5 comprenant au moins un système d'alimentation pompant ledit produit liquide à destination d'une buse 18, dans lequel le système d'alimentation comprenant une cuve d'eau 10, une pompe d'alimentation 43 d'une cuve de pré-mélange 30 depuis la cuve d'eau 10, un réservoir de produit phytosanitaire 40, un système de distribution 44 de produit phytosanitaire depuis le réservoir de produit phytosanitaire 40 dans la cuve de pré-mélange 30, le dispositif informatisé comprenant un module de détermination adapté pour déterminer de manière répétée une valeur pour une caractéristique de distribution dudit système d'alimentation, notamment une valeur pour une caractéristique de distribution relative par la pompe d'alimentation 11 et le système de distribution 13,14, à partir d'une localisation relative de ladite buse 18 et d'une zone à traiter 4.

En variante, la pompe d'alimentation 11 n'est pas commandée par le dispositif informatisé de contrôle 50. Dans cette variante, la pression en sortie de la pompe d'alimentation 11 n'est pas pilotée et est constante.

Les procédés qui sont décrits ci-dessus peuvent être mis en œuvre par un ou plusieurs processeurs d'un ordinateur ou machine programmable qui exécute un programme d'ordinateur.

**Références**

outil de pulvérisation agricole 1
systèmes de détection d'adventices ou de symptômes foliaires de stress ou maladies ou d'indicateurs foliaires de biomasse 2
végétal cible 4
parcelle agricole 5
cuve 10
pompe à couple variable 11
clapet de surpression 12
électrovanne de contrôle de pression 13
électrovanne de contrôle de rampe 14
filtre 15
vanne à ressort 16
circuit de distribution en circulation continue 17
buse de pulvérisation 18
capteur de pression 19
surpresseur 20
cuve de pré-mélange 30
cuve de phytosanitaire 40
cuve d'adjuvant 41
cuve de poudre 42
pompe volumétrique grand débit 43
pompe volumétrique 44
pompe volumétrique 45
distributeur volumétrique 46
calculateur 50

**Revendications**

1. Dispositif informatisé de contrôle d'un circuit hydraulique de distribution d'un produit liquide à pulvériser d'une machine agricole de traitement d'une parcelle agricole comprenant au moins un circuit de distribution en circulation continue alimentant une pluralité de buses, et un système d'alimentation pompant ledit produit liquide à destination du circuit de distribution en circulation continue, le dispositif informatisé comprenant un module de détermination d'un contrôleur (50) adapté pour déterminer de manière répétée une valeur pour une caractéristique de distribution dudit système d'alimentation et de manière répétée une valeur pour une caractéristique d'au moins une buse (18), à partir d'une mesure de pression dans le circuit hydraulique en circulation continue et d'une localisation relative de ladite buse (18) et d'une zone à traiter.

2. Dispositif informatisé de contrôle d'un circuit hydraulique de distribution d'un produit liquide à pulvériser d'une machine agricole de traitement d'une parcelle agricole selon la revendication 1, dans lequel le système d'alimentation comprend une pompe (11) principale et une électrovanne (14) en aval de la pompe (11) principale, et dans lequel la caractéristique de distribution comprend une caractéristique de la pompe (11) principale et/ou une caractéristique de l'électrovanne (14).

3. Dispositif informatisé de contrôle d'un circuit hydraulique de distribution d'un produit liquide à pulvériser d'une machine agricole de traitement d'une parcelle agricole selon l'une des revendications 1 à 2, dans lequel la caractéristique de buse (18) correspond à une ouverture, ladite ouverture étant déterminée :

   - dans une gamme {minimum ; maximum}, dans laquelle le maximum est 100% et le minimum est 0% ou est x% avec x différent de 0 ; ou
   - dans une gamme continue entre un minimum et un maximum.

4. Dispositif informatisé de contrôle d'un circuit hydraulique de distribution d'un produit liquide à pulvériser d'une machine agricole de traitement d'une parcelle agricole selon l'une des revendications 1 à 3, comprenant en outre un module informatisé de détection d'une zone à traiter comprenant un adventice, symptôme foliaire de stress ou maladies ou indicateur foliaire de biomasse.

5. Dispositif informatisé de contrôle d'un circuit hydraulique de distribution d'un produit liquide à pulvériser d'une machine agricole de traitement d'une parcelle agricole selon l'une des revendications 1 à 4, dans lequel le module de détermination utilise également une vitesse de la machine agricole.

6.  Circuit hydraulique de distribution d'un produit liquide à pulvériser d'une machine agricole de traitement d'une parcelle agricole comprenant au moins un circuit de distribution en circulation continue (17) alimentant une pluralité de buses (18), un système d'alimentation pompant ledit produit liquide à destination du circuit de distribution en circulation continue (17), et un dispositif informatisé de contrôle selon l'une quelconque des revendications 1 à 5, le module de détermination du dispositif informatisé étant adapté pour déterminer de manière répétée une valeur pour une caractéristique de distribution dudit système d'alimentation et de manière répétée une valeur pour une caractéristique d'au moins une buse (18), à partir d'une mesure de pression dans le circuit hydraulique en circulation continue et d'une localisation relative de ladite buse et d'une zone à traiter.

7.  Circuit hydraulique de distribution d'un produit liquide à pulvériser d'une machine agricole de traitement d'une parcelle agricole selon la revendication 6, dans lequel le système d'alimentation comprend une pompe (11) principale et une électrovanne (14) en aval de la pompe (11) principale, et comprenant en outre :

    - un clapet de surpression (12) disposé entre la pompe (11) principale et l'électrovanne (14), et adapté pour évacuer des surplus de pression hors du circuit de distribution en circulation continue ; et/ou
    - un surpresseur (20) disposé entre la pompe (11) principale et l'électrovanne (14).

8.  Circuit hydraulique de distribution d'un produit liquide à pulvériser d'une machine agricole de traitement d'une parcelle agricole selon la revendication 6 ou 7, dans lequel le circuit de distribution en circulation continue (17) comprend une vanne à ressort (16) d'évacuation en aval des buses (18).

9.  Circuit hydraulique de distribution d'un produit liquide à pulvériser d'une machine agricole de traitement d'une parcelle agricole selon l'une des revendications 6 à 8, comprenant en outre une cuve (10, 30) du produit liquide à pulvériser, le système d'alimentation pompant ledit produit liquide dans la cuve (10, 30).

10. Circuit hydraulique de distribution d'un produit liquide à pulvériser d'une machine agricole de traitement d'une parcelle agricole selon la revendication 9, dans lequel la cuve (30) est une cuve de pré-mélange, le circuit comprenant en outre une cuve d'eau (10), une pompe (43) d'alimentation de la cuve de pré-mélange depuis la cuve d'eau, un réservoir (40, 41, 42) de produit phytosanitaire, un système de distribution (44, 45, 46) de produit phytosanitaire depuis le réservoir de produit phytosanitaire dans la cuve de pré-mélange, et dans lequel le module de détermination est adapté pour déterminer en outre une valeur pour une caractéristique de distribution de la pompe d'alimentation et/ou du système de distribution de produit phytosanitaire.

11. Système de distribution d'un produit liquide à pulvériser d'une machine agricole de traitement d'une parcelle agricole, comprenant au moins un système de détection (2) déterminant une localisation d'une zone à traiter, et un circuit hydraulique selon l'une des revendication 6 à 10, le module de détermination du dispositif informatisé étant adapté pour déterminer de manière répétée une valeur pour une caractéristique d'au moins une buse, à partir d'une mesure de pression dans le circuit hydraulique en circulation continue et d'une localisation relative de ladite buse et d'une zone à traiter déterminée à partir de ladite localisation d'une zone à traiter déterminée par le système de détection (2).

12. Procédé informatisé de contrôle d'un circuit hydraulique de distribution d'un produit liquide à pulvériser d'une machine agricole de traitement d'une parcelle agricole comprenant au moins un circuit de distribution en circulation continue alimentant une pluralité de buses, et un système d'alimentation pompant ledit produit liquide à destination du circuit de distribution en circulation continue, le procédé informatisé comprenant :

    - un module de détermination d'un contrôleur (50) détermine de manière répétée une valeur pour une caractéristique d'au moins une buse, et de manière répétée une valeur pour une caractéristique de distribution dudit système d'alimentation, à partir d'une mesure de pression dans le circuit hydraulique en circulation continue et d'une localisation relative de ladite buse et d'une zone à traiter.

13. Programme d'ordinateur comprenant des instructions de code de programme pour l'exécution du procédé selon la revendication 12 lorsque le programme est exécuté sur un ordinateur.

EP 3 922 099 A1

[Fig. 1]

[Fig. 2]

[Fig. 3]

[Fig. 4]

[Fig. 5]

Europäisches
Patentamt

European
Patent Office

Office européen
des brevets

# RAPPORT DE RECHERCHE EUROPEENNE

Numéro de la demande

EP 20 17 9018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 539 376 A1 (HORSCH LEEB APPLICATION SYSTEMS GMBH [DE]) 18 septembre 2019 (2019-09-18) * alinéas [0003], [0010], [0025], [0026], [0028], [0030], [0032], [0033], [0043], [0045] - [0047], [0054], [0056], [0057], [0059], [0061], [0071] * * alinéas [0072], [0077], [0078], [0081], [0086], [0087], [0095], [0096], [0097], [0098] * * figures * ----- | 1-13 | INV. A01M7/00 |
| X,D | WO 2012/032245 A1 (EXEL IND [FR]; BALLU PATRICK JEAN MARIE [FR]) 15 mars 2012 (2012-03-15) * page 2, lignes 8-26 * * page 3, lignes 32-35 * * page 4, lignes 13-16 * * page 5, ligne 33 - page 6, ligne 7 * * figures * ----- | 1-13 | |
| A | EP 3 485 729 A1 (AMAZONEN WERKE DREYER H [DE]) 22 mai 2019 (2019-05-22) * alinéas [0015], [0019], [0032], [0034], [0039] * * figures * ----- | 1-13 | **DOMAINES TECHNIQUES RECHERCHES (IPC)** A01M |
| A | US 2015/367357 A1 (HUMPAL RICHARD A [US] ET AL) 24 décembre 2015 (2015-12-24) * alinéas [0031], [0041], [0048], [0050], [0051] * * figures * ----- | 1-13 | |

Le présent rapport a été établi pour toutes les revendications

| Lieu de la recherche | Date d'achèvement de la recherche | Examinateur |
|---|---|---|
| Munich | 26 novembre 2020 | Schlichting, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 17 9018

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-11-2020

| Document brevet cité au rapport de recherche | | Date de publication | Membre(s) de la famille de brevet(s) | | Date de publication |
|---|---|---|---|---|---|
| EP 3539376 | A1 | 18-09-2019 | DE 102018105631 | A1 | 12-09-2019 |
| | | | EP 3539376 | A1 | 18-09-2019 |
| WO 2012032245 | A1 | 15-03-2012 | DK 2613628 | T3 | 14-10-2019 |
| | | | EA 201390342 | A1 | 30-08-2013 |
| | | | EP 2613628 | A1 | 17-07-2013 |
| | | | ES 2748000 | T3 | 12-03-2020 |
| | | | FR 2964577 | A1 | 16-03-2012 |
| | | | HR P20191816 | T1 | 21-02-2020 |
| | | | HU E046019 | T2 | 28-01-2020 |
| | | | LT 2613628 | T | 25-10-2019 |
| | | | PL 2613628 | T3 | 31-03-2020 |
| | | | PT 2613628 | T | 18-10-2019 |
| | | | SI 2613628 | T1 | 29-11-2019 |
| | | | US 2013292487 | A1 | 07-11-2013 |
| | | | WO 2012032245 | A1 | 15-03-2012 |
| EP 3485729 | A1 | 22-05-2019 | DE 102017126425 | A1 | 16-05-2019 |
| | | | EP 3485729 | A1 | 22-05-2019 |
| US 2015367357 | A1 | 24-12-2015 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012032245 A
- WO 2019053364 A
- EP 202056401 A

**Littérature non-brevet citée dans la description**

- Clyde E. Leighty. *Yearbook of Agriculture,* 1938
- Evaluating Cover Crops for Benefits, Costs and Performance within Cropping System Niches. Agronomy Journal. American Society of Agronomy, vol. 97, 322-32
- *Pulvérisation en grandes cultures. Les clés de la réussite*
- *La bineuse, un outil adapté à une large gamme de sol*
- Alternative methods in weed management to the use of glyphosate and other herbicide. 2018
- **JÉRÉMIE BOSSU.** Segmentation d'images pour la localisation d'adventices. Application à la réalisation d'un système de vision pour une pulvérisation spécifique en temps réel. Université de Bourgogne/CNRS, 04 Décembre 2007, vol. 5158
- Buses à pulsation, une autre voie en pulvérisation de précision. *Perspectives agricoles,* Juin 2017